# EUROPÄISCHE PATENTANMELDUNG

(11) **EP 2 738 440 A2**
(43) Veröffentlichungstag der Anmeldung: **04.06.2014**
(21) Anmeldenummer: 13005506.4
(22) Anmeldetag: 26.11.2013
(51) Int. Cl.: F16L 57/00

(54) **Abdeckvorrichtung**

(30) Priorität: 28.11.2012 DE 102012023174
(71) Anmelder: Rosen Swiss AG, 6370 Stans (CH)
(72) Erfinder: Heiner Geers, D-49844 Bawinkel (DE)
(74) Vertreter: Wischmeyer, André

(57) **Zusammenfassung**

Abdeckvorrichtung für das stirnseitige Ende (19) eines vorzugsweise hohlzylindrischen Körpers (1), insbesondere eines Pipelinerohres, umfassend eine zur Anordnung an einer Körperinnenseite (2) vorgesehene Hülse (3) und eine hiermit verbundene, zur äußeren Anlage an den Körper (1) vorgesehene Manschette (4), wobei die Hülse (3) und Manschette (4) über einen Gelenkbereich (7) miteinander verbunden sind und die in einer Vorbefestigungsposition mit einer Innenseite (5) bezüglich einer Längsmittelachse (6) nach außen zeigende Manschette (4) zur Befestigung an dem Körper (1) insbesondere nach Einführung der Hülse (3) in diesen über die Stirnseite an eine Körperaußenseite (9) anklappbar ist, dergestalt, dass die Innenseite (5) zur Anlage an den Körper (1) gelangt. Des Weiteren betrifft die Erfindung ein Verfahren zur Montage und Demontage einer entsprechenden Abdeckvorrichtung. (Fig. 1)

## Beschreibung

Die vorliegende Erfindung betrifft eine Abdeckvorrichtung für das stirnseitige Ende eines vorzugsweise hohlzylindrischen Körpers, insbesondere eines Pipelinerohres, umfassend eine zur Anordnung einer Körperinnenseite vorgesehene Hülse und eine hiermit verbundene, zur äußeren Anlage an den Körper vorgesehene Manschette.

Aus der US 3744528 ist ein Gegenstand nach dem Oberbegriff des Anspruchs 1 bekannt. Die dort beschriebene Abdeckvorrichtung ist allerdings vergleichsweise schwierig zu montieren, da bei der Montage das abzudeckende Ende eines beispielsweise als Pipelinerohres ausgebildeten hohlzylindrischen Körpers sowohl auf seiner Innenseite wie auch auf der Außenseite mit dem Rohr reibt. Aus der DE 102009017973 A1 ist darüber hinaus eine zweiteilige Lösung bekannt, bei der die Manschette und die Hülse nacheinander aufgebracht werden können. Es hat sich allerdings als nachteilig erwiesen, bei den oftmals harschen Umweltbedingungen, in denen die Enden von Pipelinerohren verschlossen bzw. freigelegt werden sollen, eine zweiteilige Abdeckvorrichtung zu verwenden.

Es ist daher Aufgabe der vorliegenden Erfindung, eine gattungsgemäße Abdeckvorrichtung hinsichtlich ihrer Handhabung zu verbessern.

Die Aufgabe wird gelöst durch einen Gegenstand gemäß Anspruch 1 sowie durch Verfahren gemäß den Ansprüchen 12 und 13. Vorteilhafte Ausgestaltungen der Erfindung lassen sich den auf diesen Anspruch bezogenen Unteransprüchen sowie der nachfolgenden Figurenbeschreibung entnehmen.

Erfindungsgemäß ist vorgesehen, dass Hülse und Manschette über einen Gelenkbereich miteinander verbunden sind und die in einer Vorbefestigungsposition mit einer Innenseite bezüglich einer Längsmittelachse von dieser weg nach außen zeigende Manschette zur Befestigung an dem Körper insbesondere nach Einführung der Hülse in diesen über die Stirnseite an eine Körperaußenseite anklappbar ist, dergestalt, dass die Innenseite zur Anlage an den Körper gelangt. Auf eine Zweiteilung von Hülse und Manschette wird verzichtet, was den Umgang im Feld erleichtert. Gleichzeitig kann zuerst die Hülse in den hohlzylindrischen Körper eingeschoben werden, so dass der Montagevorgang gegenüber dem Stand der Technik vereinfacht ist. Anschließend kann die hierfür sinnvollerweise aus einem flexiblen Material hergestellte oder zumindest in Teilen flexible Manschette über die Stirnseite des Körpers an die Körperaußenseite angeklappt werden, wodurch die in der Vorbefestigungsposition von einer Längsmittelachse weg nach außen zeigende Innenseite zur Anlage an den Körper gelangt und somit die Innenseite zur Längsmittelache hin gerichtet ist. Die Manschette ist somit aus einer Vorbefestigungsposition vorzugsweise um rund 180° umklappbar.

Der Gelenkbereich, der Manschette und Hülse miteinander verbindet, kann hierbei auf verschiedene Weisen ausgebildet sein. Neben herkömmlichen, in Manschette und Hülse eingebrachten Gelenken in Form von Kunststoffscharnieren od.dgl. kann das Gelenk zwischen Hülse und Manschette gezielt durch das verwendete Material ausgebildet werden. Insbesondere weist der Gelenkbereich zumindest ein einstückig mit der Manschette und/oder der Hülse ausgebildetes Gelenk auf. Vorzugsweise handelt es sich hierbei um ein Gelenk nach Art eines Filmscharniers. Dieses ist durch gezielte Materialwahl bzw. durch gezielte Materialschwächung im Sinne beispielsweise einer Verschmälerung des Materials in dem zugehörigen Bereich ausgebildet. Als Material bietet sich insbesondere ein Polyurethan an. Durch die einstöckige Ausbildung des Gelenks mit Manschette und/oder Hülse kann die Abdeckvorrichtung insgesamt einstückig ausgebildet werden, was für den Herstellungsprozess vorteilhaft ist.

Es versteht sich, dass der Vorgang des Umklappens der Manschette ebenfalls eine Flexibilität des umzuklappenden Materials der Manschette voraussetzt. Durch das Umklappen wird beginnend an dem dem Gelenkbereich abgewandten Ende der Manschette diese durch ein sukzessives Herumziehen gedehnt. Der "Umklappbereich" wird somit beginnend an diesem Ende der Manschette bis hin zum Gelenkbereich durchlaufen. Bei einer ohne besondere Gelenke in Form von Filmscharnieren oder dergleichen ausgebildeten Abdeckvorrichtung, bei der die Manschette inklusive des Gelenkbereich aus demselben Material gleicher Wandstärke ist, kennzeichnet der Gelenkbereich somit nur den Bereich, der im Bereich des in der Befestigungsposition vorhandenen Stirnendes des Körpers den Übergang von der innerhalb des Körpers anzuordnenden Hülse zur außerhalb anzuordnenden Manschette darstellt. Durch die erfindungsgemäße Ausbildung der Abdeckvorrichtung ist diese wiederverwendbar. Zur Abnahme der Abdeckvorrichtung von dem Körper kann die Manschette wieder in ihre ursprüngliche Vorbefestigungsposition zurückgeklappt werden.

In einer besonders vorteilhaften Ausbildung der Erfindung wird der Gelenkbereich durch zwei voneinander beabstandeten Filmscharniere ausgebildet, wodurch im Verlaufe des Umklappens eine Verlagerung der Manschette von der Längsachse weg nach außen erfolgen kann, um einen durch die Wandstärke des Rohres ausgebildeten Bereich zumindest in Teilen zu überbrücken. Durch die Ausbildung zweier Gelenke kann der zwischen den Gelenken befindliche Bereich sich in der Befestigungsposition in etwa parallel zur Stirnfläche des Körpers erstrecken, so dass ein ordentlicher Abschluss der Abdeckvorrichtung nach vorne hin ermöglicht wird.

Vorteilhafterweise ist der von der Hülse ausgebildete Innenquerschnitt, d.h. der zwischen den Hülsenwänden bzw. deren Innenseiten ausgebildete freie Querschnitt durch ein insbesondere als Membran ausgebildetes Abdeckelement abgedeckt, um nicht nur die Stirnseite sondern auch das weitere Innere des Rohres zu schützen. Unter einer Membran wird hierbei insbesondere ein atmungsaktives, d.h. wasserdampfdurchlässiges Material verstanden, welches jedoch gegenüber Flüssigkeiten bis zu einer jeweils gewünschten Wassersäule von z.B. 5000 mm gemäß EN 343:2003 undurchlässig ist.

Wird ein Rohr mit herkömmlichen Abdeckvorrichtungen an beiden Enden verschlossen bildet sich aus der vorhandenen Feuchtigkeit ein Kondensat, welches zu Korrosion führen kann. Durch die erfindungsgemäße Ausbildung mit einer Membran wird ein Entfernen verdunsteter Flüssigkeit durch den Luftaustausch mit der Umgebung ermöglicht, das Rohr wird getrocknet, Korrosion reduziert.

Zu Herstellungszwecken ist es vorteilhaft, wenn in einer vorbefestigten Position eine Innenseite der Hülse und eine Außenseite der Manschette fluchtend ineinander übergehen. Entsprechend ist das Gießen einer solchen Abdeckvorrichtung ohne weiteres möglich. Gleichzeitig erfolgt durch das Umklappen dann automatisch eine Aufweitung der Manschette, die zu einer guten Anlage der Manschette an das Rohr führt.

Alternativ kann im Gelenkbereich ein Versatz der Vorrichtung vorhanden sein, so dass durch die Oberfläche der Hülse und der Manschette verlaufende Geraden zu einer Längsmittelachse parallel verschoben zueinander erscheinen. Durch den dann größeren Innendurchmesser der Manschette in der Vorbefestigungsposition kann die zum Umklappen und hiermit einhergehenden Aufweiten der Manschette notwendige Kraft reduziert werden.

Um einerseits eine ausreichend große Stabilität der Abdeckvorrichtung, andererseits jedoch eine ausreichende Flexibilität hinsichtlich des Umklappens zu gewährleisten, ist bei einer vorteilhaften Ausbildung der Erfindung die Wandstärke der Hülse größer als die der Manschette.

Weiterhin verschmutzt die erfindungsgemäße Abdeckvorrichtung weniger, wenn die die Innenseite der Hülse und die Außenseite der Manschette rillenfrei ausgebildet sind. Dies erleichtert gleichzeitig wiederum einen Gießprozess und somit die Herstellung der erfindungsgemäßen Abdeckvorrichtung.

Zur besseren Anlage der Abdeckvorrichtung an den Körper und zur besseren Abdichtung des hergestellten Verschlusses kann die in der Vorbefestigungsposition nach außen gerichtete Innenseite der Manschette zumindest eine Dichtlippe aufweisen.

In einer weiteren vorteilhaften Ausbildung der Erfindung weist die Hülse einen Anschlag zur zumindest teilweisen Abdeckung der Stirnseite des Körpers auf. So ist einerseits eine Montagehilfe geschaffen, die verhindert, dass die Hülse zu weit in den Körper eingeführt wird. Andererseits kann die für ein späteres Verschweißen besonders zu schützende Stirnseite des Körpers besser geschützt werden. Hierbei wirkt der Anschlag nicht nur als Korrosionsschutz sondern ebenfalls als Schutz vor mechanischer Deformation beispielsweise während eines Transports.

Die Integration der Abdeckvorrichtung in ein Überwachungs- und Sicherungssystem ist dann verbessert, wenn ein der Manschette oder dem Gelenkbereich zugeordnetes Auslöseelement in der Montageposition oder während der Montage zur insbesondere weiteren Aktivierung einer Sicherheitsvorrichtung führt. Durch das Umklappen kann somit eine z.B. bereits in einem Standby-Modus befindliche Sicherheitsvorrichtung scharf geschaltet oder komplett eingeschaltet werden.

Die eingangs gestellte Aufgabe wird gemäß dem bereits Beschriebenen ebenfalls durch ein Verfahren zur Montage einer vor- oder nachbeschriebenen Abdeckvorrichtung gelöst, bei dem zunächst die Hülse insbesondere bis zu einem Anschlag in den Körper eingeschoben wird, und anschließend die Manschette aus einer Vorbefestigungsposition vor dem stirnseitigen Ende des Körpers in eine Anlageposition an dem Körper umgeklappt wird.

Ebenfalls erfindungsgemäß verläuft eine Demontage einer wie vorbeschrieben an dem Körper befestigen, vor- oder nachbeschriebenen Abdeckvorrichtung, wobei die Manschette aus ihrer Befestigungsposition in die Vorbefestigungsposition zurückgeklappt wird.

Weitere Vorteile und Einzelheiten der Erfindung lassen sich der nachfolgenden Figurenbeschreibung entnehmen.

In den schematischen Abbildungen der Figuren zeigt:
- Fig. 1: einen Vertikalschnitt durch eine erfindungsgemäße Vorrichtung gemäß C-C nach Fig. 2,
- Fig. 2: den Gegenstand nach Fig. 1 in einer stirnseitigen Ansicht,
- Fig. 3: den Ausschnitt D nach Fig. 1,
- Fig. 4: den Gegenstand nach Fig. 1 in einer Befestigungsposition an einem Pipelinerohr,
- Fig. 5: den Ausschnitt B nach Fig. 4.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

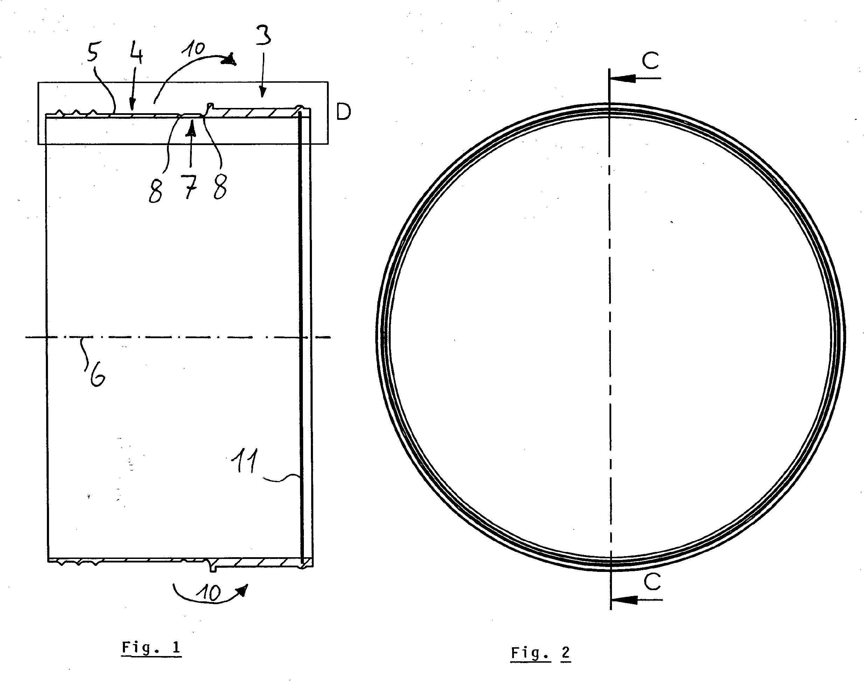

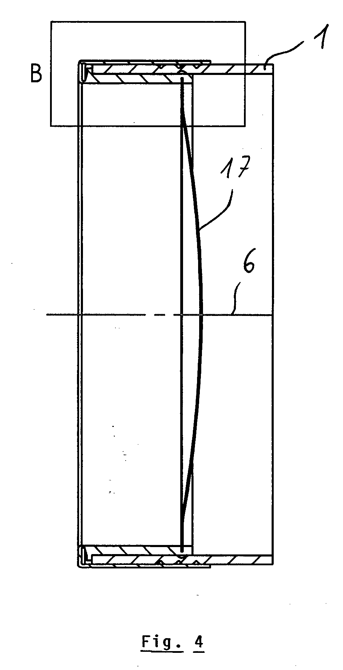

Fig. 1 zeigt eine erfindungsgemäße Abdeckvorrichtung für das Ende eines vorzugsweise als Pipelinerohr ausgebildeten hohlzylindrischen Körper 1 (vgl. Fig. 4) in einer Vorbefestigungsposition, in der die Abdeckvorrichtung noch nicht an dem Rohr befestigt ist. Vielmehr handelt es sich in der gezeigten Darstellung um einen Produktionszustand, in dem die Abdeckvorrichtung sich unmittelbar nach der Produktion befindet.

Die Abdeckvorrichtung umfasst eine zur Anordnung an einer Körperinnenseite 2 vorgesehene Hülse 3, wobei die Körperinnenseite durch die Innenseite des Rohres ausgebildet wird. Mit der Hülse 3 ist eine zur äußeren Anlage an den Körper 1 vorgesehene Manschette 4 verbunden, die in der in Fig. 1 gezeigten Position mit ihrer Innenseite 5 nach außen und somit weg von einer Längsmittelachse 6 zeigt. Hülse 3 und Manschette 5 sind durch einen Gelenkbereich 7 miteinander verbunden. Dieser Gelenkbereich wird über zwei Filmscharniere 8 mit ausgebildet. Hülse 3, Gelenkbereich 7 und Manschette 4 sind somit einstückig miteinander ausgebildet. Die Innenseite 5 dient zur Anlage an eine Außenseite 9. Hierzu kann die Manschette in Richtung der Pfeile 10 um 180° umgeklappt bzw. -gestülpt werden.

In der Fig. 2 ist eine Ansicht der Hülse ohne das in der Fig. 1 vorhandene und als Membran ausgebildete Abdeckelement 11 gezeigt. Anstelle eines quer zur Längsmittelachse 6 betrachtet kreisrunden Querschnitts kann die erfindungsgemäße Abdeckvorrichtung auch ovale Querschnittsformen aufweisen, um andere, beispielsweise ovale Rohre abdecken.

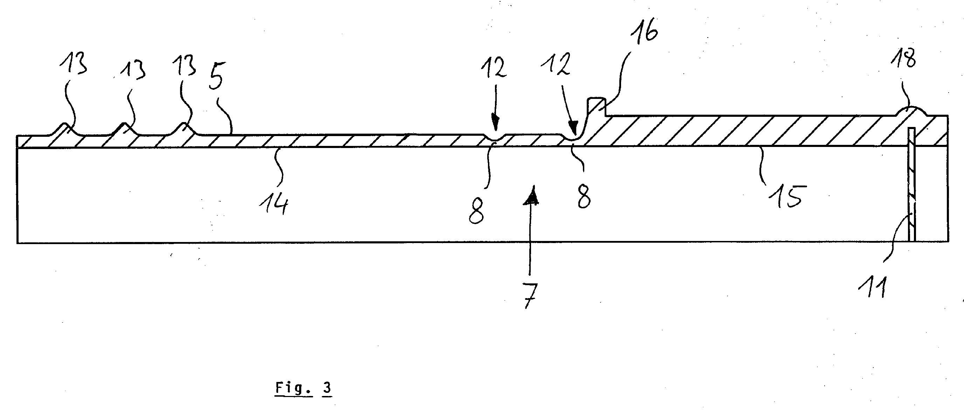

Der Ausschnitt D gemäß Fig. 3 zeigt die Ausbildung des Gelenkbereichs 7 deutlicher. Verschmälerungen bzw. Dünnstellen im Material bilden Filmscharniere 8 auf, die umlaufend um den kompletten Umfang der Abdeckvorrichtung herum verlaufen. Um gezielt Versteifungen oder steifere Abschnitte mit einzubringen, kann die jeweilige Nut 12 eines Filmscharniers in Umfangsrichtung unterbrochen sein.

Auf der in der Vorbefestigungsposition nach außen weisenden Innenseite 5 der Hülse sind drei in Umfangsrichtung umlaufende Verdickungen zur Ausbildung von Dichtlippen 13 angeordnet. Eine Außenseite 14 der Manschette und eine Innenseite 15 der Hülse gehen inklusive des Gelenkbereichs fluchtend ineinander über, wobei auf eine Profilierung der Oberfläche Verzicht wird. Die aus den Seiten 14und 15 gebildete Seite ist somit verbessert schmutzabweisend.

Die Hülse 3 weist einen in Umfangsrichtung vorzugsweise komplett umlaufenden Anschlag 16 auf, der ein Einschieben der Hülse 3 in den Körper 1 begrenzt. In einem Ende der Hülse 3 ist das Abdeckelement 11 in Form einer Membran integriert, die einer Wassersäule von 5000 mm standhält, jedoch wasserdampfdurchlässig ist.

In der in Fig. 4 gezeigten Befestigungsposition ist die Manschette 4 um 180° umgeklappt und liegt an der Außenseite 9 des Körpers 1 an. Durch die einstückige Ausbildung von Manschette, Gelenkbereich und Hülse sowie die zugehörigen Dichtlippen 13 einschließlich einer weiteren Dichtlippe 18 der Hülse ist die Abdeckvorrichtung fest mit dem stirnseitigen Ende des Körpers 1 verbunden. Die Vorrichtung sitzt auch fest genug, um durch Druck oder Sog an der Membran bzw. dem Abdeckelement 11 angreifende Kräfte aufnehmen und trotzdem einen sicheren Sitz behalten zu können.

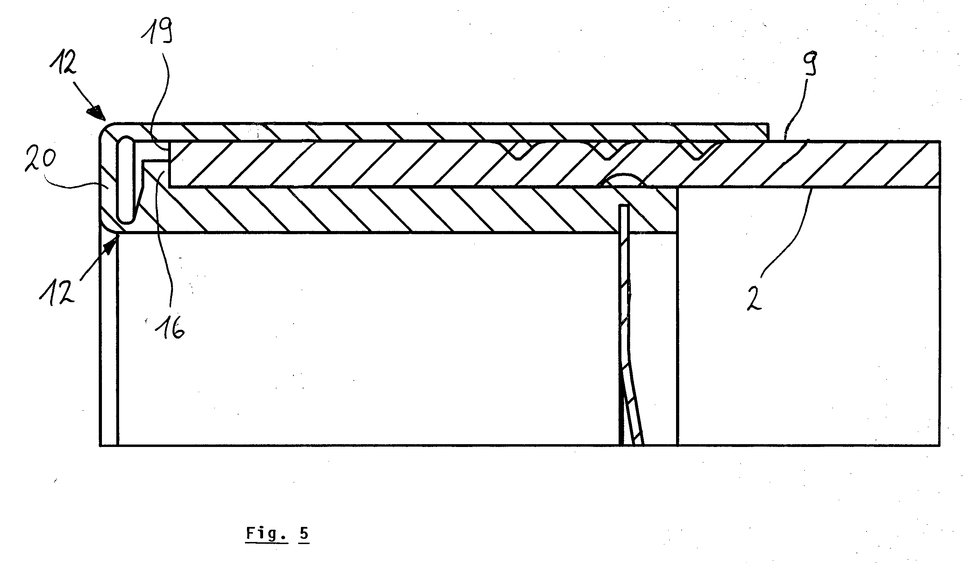

Fig. 5 zeigt den Bereich B aus Fig. 4. Zwecks Vereinfachung der Darstellung sind die Dichtlippen 13 und die Dichtlippe 18 in das Rohr hineingezeichnet. In der eigentlichen Befestigungsposition liegen sie auf der Außenseite 9 bzw. der Innenseite 2 auf.

Ein stirnseitiges Ende 19 des Rohres wird teilweise von dem Anschlag 16 abgedeckt, wodurch ein Kantenschutz für die Stirnseite erreicht wird. Die beiden Filmscharniere 12 begrenzen einen Teilbereich 20 des Gelenkbereichs, der parallel zur Stirnfläche verläuft und gleichzeitig durch den ausgebildeten Pufferbereich den Kantenschutz verbessert. Die Erstreckung des Teilbereichs 20 in Richtung parallel zu Stirnfläche kann dergestalt auf die Wandstärke des Körpers 1 abgestimmt sein, dass das in der Figur obere Gelenk auf Höhe der Manschette 4 ist. Die Wandstärke der Manschette ist bei dem gewählten Ausführungsbeispiel geringer als die der Hülse.

## Patentansprüche

1. Abdeckvorrichtung für das stirnseitige Ende (19) eines vorzugsweise hohlzylindrischen Körpers (1), insbesondere eines Pipelinerohres, umfassend eine zur Anordnung an einer Körperinnenseite (2) vorgesehene Hülse (3) und eine hiermit verbundene, zur äußeren Anlage an den Körper (1) vorgesehene Manschette (4), **dadurch gekennzeichnet, dass** Hülse (3) und Manschette (4) über einen Gelenkbereich (7) miteinander verbunden sind und die in einer Vorbefestigungsposition mit einer Innenseite (5) bezüglich einer Längsmittelachse (6) nach außen zeigende Manschette (4) zur Befestigung an dem Körper (1) insbesondere nach Einführung der Hülse (3) in diesen über die Stirnseite an eine Körperaußenseite (9) anklappbar ist, dergestalt, dass die Innenseite (5) zur Anlage an den Körper (1) gelangt.

2. Abdeckvorrichtung nach Anspruch 1, **dadurch gekennzeichnet, dass** der Gelenkbereich (7) zumindest ein einstückig mit der Manschette (4) und/oder der Hülse (3) ausgebildetes Gelenk umfasst.

3. Abdeckvorrichtung nach Anspruch 2, **dadurch gekennzeichnet, dass** das Gelenk durch zumindest ein Filmscharnier (12) ausgebildet wird.

4. Abdeckvorrichtung nach Anspruch 3, **dadurch gekennzeichnet, dass** der Gelenkbereich (7) durch zwei voneinander beabstandete Filmscharniere (12) ausgebildet wird.

5. Abdeckvorrichtung nach einem der vorherigen Ansprüche, **dadurch gekennzeichnet, dass** in einer Vorbefestigungsposition eine Innenseite (15) der Hülse (3) und eine Außenseite (14) der Manschette (3) fluchtend ineinander übergehen.

6. Abdeckvorrichtung nach einem der vorherigen Ansprüche, **dadurch gekennzeichnet, dass** die Wandstärke der Hülse (3) größer ist als die der Manschette (4).

7. Abdeckvorrichtung nach einem der vorherigen Ansprüche, **dadurch gekennzeichnet, dass** die Innenseite (15) der Hülse (3) und die eine Außenseite (14) der Manschette (4) rillenfrei ausgebildet sind.

8. Abdeckvorrichtung nach einem der vorherigen Ansprüche, **dadurch gekennzeichnet, dass** die in der Vorbefestigungsposition nach außen gerichtete Innenseite (5) der Manschette (4) zumindest eine Dichtlippe (13) aufweist.

9. Abdeckvorrichtung nach einem der vorherigen Ansprüche, **dadurch gekennzeichnet, dass** die Hülse (3) einen Anschlag (16) zur zumindest teilweisen Abdeckung der Stirnseite (19) des Körpers (1) aufweist.

10. Abdeckvorrichtung nach einem der vorherigen Ansprüche, **dadurch gekennzeichnet, dass** der von der Hülse (3) ausgebildete Innenquerschnitt durch ein vorzugsweise als Membran ausgebildetes Abdeckelement (11) abgedeckt ist.

11. Abdeckvorrichtung nach einem der vorherigen Ansprüche, **dadurch gekennzeichnet, dass** ein der Manschette (4) oder dem Gelenkbereich (7) zugeordnetes Auslöselement in der Montageposition oder während der Montage zur insbesondere weiteren Aktivierung einer Sicherheitsvorrichtung führt.

12. Verfahren zur Montage einer Abdeckvorrichtung nach einem der vorherigen Ansprüche, **gekennzeichnet durch** die Schritte Einschieben der Hülse in den Körper, Umklappen der Manschette aus einer Vorbefestigungsposition vor dem stirnseitigen Ende (19) des Körpers in eine Anlageposition an dem Körper.

13. Verfahren zur Demontage einer gemäß Anspruch 12 an einem Körper befestigen Abdeckvorrichtung nach einem der Ansprüche 1 bis 11, **dadurch gekennzeichnet, dass** die Manschette aus ihrer Befestigungsposition in die Vorbefestigungsposition zurückgeklappt wird.
